Europäisches Patentamt

European Patent Office

Office européen des brevets

(19)

(11) **EP 0 764 921 A1**

## (12) EUROPEAN PATENT APPLICATION
### published in accordance with Art. 158(3) EPC

(43) Date of publication:
26.03.1997 Bulletin 1997/13

(21) Application number: 96906900.4

(22) Date of filing: 21.03.1996

(51) Int. Cl.$^6$: **G06T 15/50**

(86) International application number:
PCT/JP96/00726

(87) International publication number:
WO 96/29681 (26.09.1996 Gazette 1996/43)

(84) Designated Contracting States:
DE FR GB IT

(30) Priority: 22.03.1995 JP 102904/95
22.03.1995 JP 102905/95
22.03.1995 JP 102906/95

(71) Applicant: Ikedo, Tsuneo
Aizuwakamatsu-shi, Fukushima 965 (JP)

(72) Inventor: Ikedo, Tsuneo
Aizuwakamatsu-shi, Fukushima 965 (JP)

(74) Representative: Weitzel, Wolfgang, Dr.-Ing.
Patentanwalt
Friedenstrasse 10
89522 Heidenheim (DE)

### (54) COMPUTER GRAPHICS CIRCUIT

(57) A computer graphics circuit for rendering light-reflected images based on a bump-mapped Phong-shading model implemented fully in hardware, comprising a span processor, a bump-mapping circuit, a reverse-projection circuit, a bump-normal RAM, and Phong-shading circuit. The surface and bump normal of each polygon is defined by horizontal and vertical angles relative to the eye-point axis in device coordinates and to an axis perpendicular to a texture mapping coordinate, respectively. The trigonometric function tables used for rotation and shading computation have an angle-range around either of horizontal or vertical angle. The surface normal of horizontal and vertical angles is rotated by the bump normal and given rotated horizontal and vertical angles to the shading circuit. The bump-mapped shading circuit is further implemented combined with a rotation-matrix multiplier and a shading circuit using trigonometric function tables of angle variables.

FIG.1

EP 0 764 921 A1

**Description**

FIELD OF THE INVENTION

Field of the invention

The described invention provides a computer graphics circuit to render image of light-reflected shading. The circuit is concerned in particular with Phong-shading with diffuse and specular reflection, and bump-mapping to express a wrinkled or dimpled surface without geometric shape modeling. The bump normal is defined with two-dimensional pattern and stored in memory device. It is mapped onto the surface of arbitrary direction. This technology is applied to the rendering processor of a virtual reality and multimedia system(e.g., amusement, simulation) to animate realistic images in real-time.

Background Art

§ 1. Background art of Phong shading circuit

Phong-shading is a typical light-reflection model in computer graphics. To design the Phong-shading circuit in hardware needs following processing; defining surface and light-source normals, calculating diffuse and specular reflections, and combining these two reflective intensities. In conventional approach, there was a circuit to define the normal of surface with angular parameter of horizontal and vertical angles relative to eye-point axis. The circuit based on this definition was simple due to a necessity of only one set of memory device for each angle. In the Phong shading model, reflection intensity $Ip$ is defined by addition of diffuse and specular reflection intensities. In conventional methods, a horizontal reflection component $Iph$ and a vertical reflection component $Ipv$ were calculated independently and added these two at final processing. To combine the horizontal and vertical intensities as a mean value, however, has a serious calculation-error at specified angles(e.g., 0 and 90 degrees). This invention is done to provide a Phong shading circuit in order to minimize above error.

§ 2. Background art of Bump mapping circuit

Bump-mapped shading is obtained by following processing; defining bump-normal, mapping the bump-normal onto surface, and calculating diffuse and specular reflection intensities with intensity of light-source and reflection angle against the surface. To map a colored pattern-texture onto surface using hardware circuit has been known, however, there is no practical circuit now for bump mapping. In practice it has been primarily implemented in software or parallel processing architecture using multiple arithmetic elements. Thus, it is very difficult to get a rendering speed around million polygons per second in conventional schemes.

This invention is carried out to establish the hardware circuit of bump-mapped shading with a rendering speed within a single clock, including the calculation combined with bump-mapping and Phong shading. The single clock of rendering speed means that a calculation result can be obtained asynchronously and it takes only delay-times for switching speed of circuit.

This invention is useful for virtual reality system which needs an animated image in real time.

SUMMARY OF THE INVENTION

This invention of claim 1 specifies a bump-mapped shading circuit comprising: (1) span processors to fill the polygon by interpolating attributes and coordinates defined at each polygon vertex, (2) a reverse-projection circuit(texture mapping circuit) and bump-pattern RAM (random access memory), which stores a function table of bump normals in a two-dimensional array, (3) a bump-mapping circuit which rotates the surface angle with the bump-mapping angle, and (4) a shading circuit to compute the diffuse and specular intensity of the bump-mapped surface reflecting multiple light-sources.

In the above-described system, the normal vectors of the polygon-surface, light-sources, and bumps are defined by two values, horizontal and vertical angles. Surface normals and light-sources are defined with angles relative to the eye-point axis in device coordinates, and bumps are defined relative to the axis perpendicular to the texture mapping address. The Phong shading model is formulated with the trigonometric functions which include either horizontal or vertical angles.

Surface angle and texture coordinates are given for each polygon vertex and interpolated along the outline of the polygon first. Then span processors interpolate these attributes and coordinates inside each polygon. The bump-angle stored in RAM is read by the address given by the reverse-projection circuit. The bump-mapping circuit receives both the surface angle from the span processor and the bump-angle from the RAM and rotates the surface angle with bump-angle.

The rotated surface angle determined by the bump-mapping circuit is given to the shading circuit, implemented with diffuse and specular reflection circuits, which compute the reflected intensity on the surface illuminated by the light-sources. This computation is carried out for every point on the polygon-surface, synchronized with the execution of the span processor. The surface shading is obtained by multiplying the reflected intensity with the texture pattern color.

The invention of claim 2 defines the array of the bump-pattern in the same 2D coordinates as the texture pattern. This pattern-coordinate is defined at each polygon vertex not only for the texture but also bump-mapping, and applied simultaneously to both texture pattern and bump-angle RAMs, after the address is projected reversely to the texture pattern coordinate from the device coordinate which a perspective projection may be applied.

The invention of claim 3 uses the memory-table for bump-normal rotation to define trigonometric functions of either horizontal or vertical surface angle input-variables for rotation of bump normal with surface normal in the bump mapping circuit.

The invention of claim 4 handles the lighting in the shading circuit with the memory tables, multipfiers and adders. The memory tables which receive either horizontal or vertical input-variables rotated the surface-normal with the bump-normal at the bump mapping circuit are used to define trigonometric functions.

The invention of claim 5 is to get the textured and bump-mapped shading surface by multiplying texture colors with red, green and red with shaded intensity at the bump-mapped shading circuit.

The invention of claim 6 comprises the RAMs for specular exponent table and trigonometric function tables which includes the light-source components while the ROM for trigonometric function table which includes only normal component of surface or bump.

As per the above description, this invention provides real-time rendering of light-reflected three dimensional images in a hardware implementation with a small-scale circuit and with small errors. To implement the bump-mapping processing in hardware brings several thousands of higher speed than the processing by software.

## BRIEF DESCRIPTION OF THE DRAWINGS

Fig. 1 is a block diagram of the Phong-shading circuit in a parallel light-source system;
Fig. 2 is a block diagram of the bump-mapped shading circuit illustrating data-flow and total organization;
Fig. 3 is a block diagram of another example of the bump-mapping circuit;
Fig. 4 is a block diagram of the bump-mapped shading system using rotation matrix and vector forms for the rotation of surface and bump normals;
Fig. 5 is a block diagram of the detailed circuit of Fig. 4;

## DETAILED DESCRIPTION OF THE PREFERRED IMPLEMENTATIONS

### §1. Shading circuit

This invention defines the normal vector of surface and light-sources as horizontal and vertical angles relative to eye-point axis in device coordinates. Equations in a conventional expression using normal vectors can be rewritten as trigonometric functions of only one variable, either the horizontal or vertical angle of surface and light-source. To use these angle-values, the cosines can be expressed as:

$$\cos \theta = \cos N_v \times \{\cos L_v[\cos(L_h - N_h) - 1]\} + \cos(L_v - N_v) \tag{1}$$

$$\cos \alpha = 2 \cos N_h \times \cos N_v \times \cos \theta - \cos L_h \cos L_v$$

$$\cos \alpha \approx (\cos \theta + \cos N_h \cos N_v)/2 \tag{2}$$

where $N_h$ and $N_v$ are the horizontal and vertical angles of the surface normal, respectively, and $L_h$ and $L_v$ are the horizontal and vertical angles of light-source normal, respectively. Equations (1), (2), and (3) do not contain combinations of multiple angle-components in division or multiplication forms such as $N_h/N_v$ or $N_h x N_v$ in the trigonometric functions.

The mathematical model of Phong-shading is expressed with following equation:

$$I = I_a + I_p = I_a + I_d\cos(\theta) + I_r\cos^n(\alpha) \tag{3}$$

where $I_a$ is ambient light, $I_p$ is reflected light, $I_d$ and $I_r$ are diffuse and specular reflection coefficients respectively, $n$ is the specular exponent, $\theta$ is the angle between the light-source and surface normal, and $\alpha$ is the angle between a mirror-reflected direction relative to the surface normal and the viewing direction. Overall intensity can be obtained by adding environmental or ambient light $I_a$ to reflected light $I_p$. Intensity $I_p$ is computed at all points of a polygon surface using the interpolation scheme for coordinates, normal vectors and other attributes being defined at the polygon vertices.

The variable-range of $N_h$ and $N_v$ is chosen to be about 10 bits. Thus, each trigonometric function has 1024 words RAM or ROM. (If two angle-variables were combined, the variable-range becomes 20 bits and 1 Mbit RAM is needed, difficult to implement in an ASIC.) The concatenated values of multiplied trigonometric functions, such as $\cos N_h \cos N_v \cos \theta$, are rounded-off to the specified significant bit-length corresponding to the necessary accuracy of image quality. The trigonometric functions in equations (1) and (2) contain the light-source angles $L_h$ or $L_v$ with $N_h$ or $N_v$. However, the light-source normal can be regarded as a unique and constant-value every video-frame cycle in the parallel lighting. Thus, all trigonometric functions in equations contain a single variable. The circuit based on equations can be implemented with memory devices, multipliers and adders. The $\cos^n \alpha$ is defined by a RAM table.

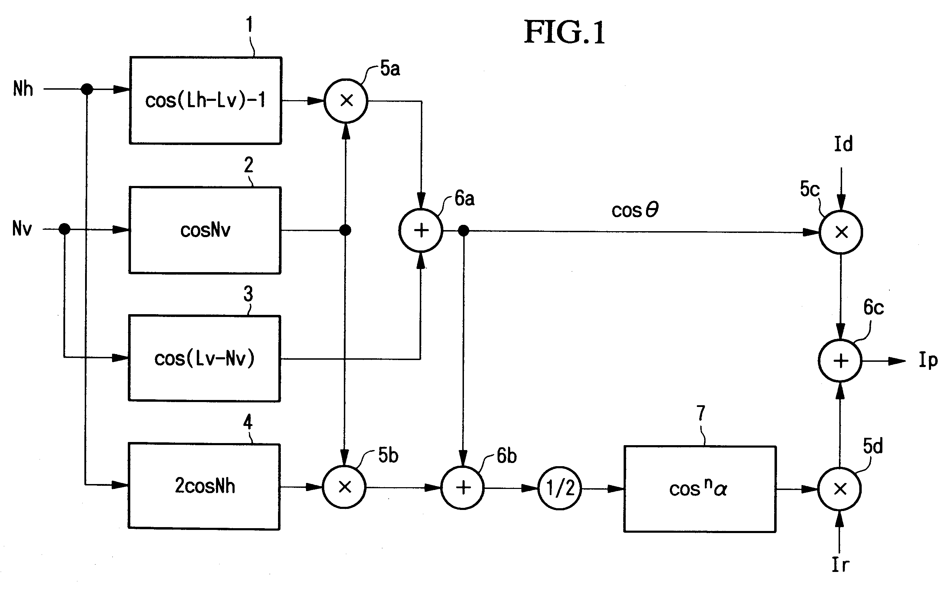

Attention is directed to Fig. 1 which shows the Phong-shading circuit of the invention based on equations (1), (2), and (3). Input variables in the circuit are the horizontal angle $N_h$ and vertical angle $N_v$ of the surface normal. This circuit computes $\cos \theta$ and $\cos \alpha$ using memory devices 1 - 4, multipliers 5a and 5b, and adders 6a and 6b. Memory devices 1 and 3 are RAMs. RAM1 and RAM3 store the terms of equation (1), $\cos L_v[\cos(L_h - N_h) - 1]$ and $\cos(L_v - N_v)$, respectively. Memory devices 2 and 4 consist of ROM and store $\cos N_v$ and $\cos N_h$, respectively.

The adders 6a and 6b output $\cos \theta$ and $2 \cos \alpha$, respectively. The diffuse reflection term is obtained by multiplying $\cos \theta$ with the diffuse coefficient $I_d$. The specular reflection term can be obtained by multiplying the specular coefficient $I_r$ with the $\cos \alpha$ output from RAM7. RAM7 stores the cosine-exponent table of $\cos^n$. The output values of $\cos \theta$ and $\cos^n \alpha$, have double bit-length at the multipfier of 5a or 5b, rounded to the specified significant bit-length. In the case that high accuracy is needed under high-specular exponent value, a linear interpolation approximation scheme can be employed using RAMs and multiplier instead of RAM7. As described by equation (1), intensity with the Phong-shading model is obtained by the addition of $I_d \cos \theta$ and $I_r \cos^n \alpha$.

## § 2. Bump-mapping circuit

Bump-mapping rotates the surface normal (angle) with a bump normal. Interpolation for polygon filling is applied to the coordinates, texture mapping address, surface angle, and light-source angles (in a multiple light-source system). The bump-pattern is allocated in two dimensional $u$, $v$ coordinates with a functional variable defined by horizontal and vertical angles, $B_h$ and $B_v$, relative to the the Axis perpendicular to $u$, $v$ coordinates. This pattern is stored in the RAM. The bump-mapped surface may be scaled and applied a perspective projection, which needs to invert the $u$, $v$ device-coordinates to texture coordinates. After this reverse-projection computation, the address is applied to the bump-pattern RAM. This address is the same as that applied to the texture pattern RAM. However, maintaining the same significant bit-length as the texture pattern address is not necessary, due to differences in resolution.

The bump-mapping circuit rotates the $N_h$ and $N_v$ angles with $B_h$ and $B_v$ to obtain angles $N_h'$ and $N_v'$. This invention represents the rotation function with a trigonometric function of one variable, either $B_h$ or $B_v$. This equation is given by following equations:

$$N_v' = \arcsin(\cos N_v \sin B_v + \sin N_v \cos B_h \cos B_v) \tag{4}$$

$$N_h' = \arcsin \sin B_h \cos B_v / \sqrt{1 - \sin^2 N_v'} + N_h$$

where

$$\beta = \arccos(\sin |B_h| \cos B_v) \cdot \sin B_h \tag{5}$$

$$m = \arcsin(\sin B_v / \sin |\beta|)$$

putting $\sin B_h$ as following:

$$1 \quad B_h > 0$$
$$0 \quad B_h = 0$$
$$1 \quad B_h < 0$$

then equation (4) is transformed by following equations:

$$N_h' = \arcsin(\cos |\beta| / \sqrt{1 - \sin^2 N_v'}) \dot{s} (-1)^u + (-1)^s u\pi + N_h$$

$$u : 0 \qquad |N_v + m| \leq \pi/2$$

$$1 \qquad | N_v + m | > \pi$$
$$s : 0 \qquad - \beta \leq 0$$
$$1 \qquad - \beta > 0$$

putting $t = \sin(N_v + m) \sin | \beta |$ ,

$$N_h' = N_h + \arcsin(\cos | \beta | / \sqrt{1 - t^2}) s(-1)^u + (-1)^s u\pi \qquad (6)$$

$$N_v' = \arcsin(\sin(N_v + m) \sin | \beta |)$$

Equations (5) is a function defined by the horizontal $B_h$ and vertical $B_v$ angles of the bump normal and these two modified angle-variables, $\beta$ and $m$, are stored in the bump pattern RAM instead of $B_h$ and $B_v$ to reduce circuit complexity. In equation (6), $N_h'$ and $N_v'$ are represented by trigonometric functions such as $\sin(N_v+m)$, $\sin \beta$, $\cos \beta$, and $t$, where the significant bit-lengths of variables in the trigonometric functions take the range of one angle or an angle plus 1 bit, allowing circuit implementation with trigonometric function-tables using small-capacity memory devices. As shown in equation (6), all of the trigonometric function table in the bump-mapping circuit can be implemented with ROMs.

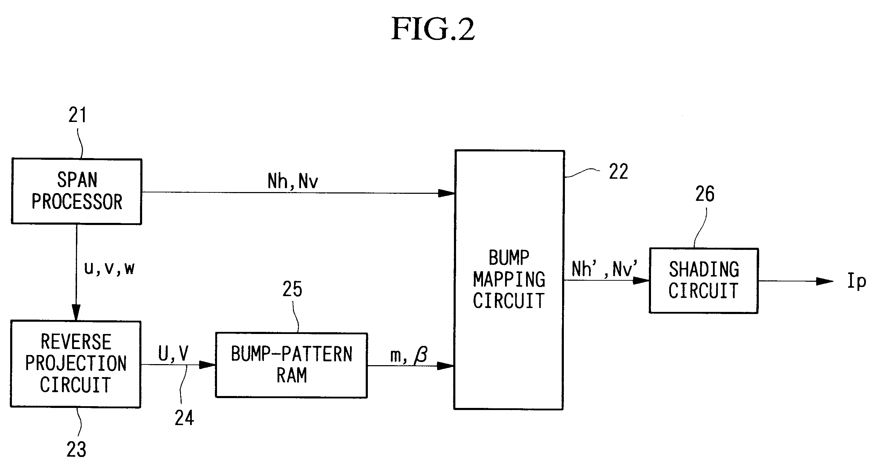

Attention is directed to Fig. 2 which shows the block diagram of a bump-mapped shading circuit. Circuit 21 is a span processor which interpolates the surface angle $N_h$ and $N_v$, and texture coordinates $u$, $v$. The $N_v$ and $N_h$ parameters are passed to bump-mapping circuit 22, while $u$, $v$ coordinates are given to the reverse-projection circuit 23, which transforms the $u$, $v$ address to texture coordinates. The reverse-mapped address 24 is then applied to the bump-pattern RAM25. In the pattern RAM, $\beta$ and $m$ are stored instead of the $B_h$ and $B_v$ to avoid computation of equation (5). The output data of RAM 25 is transfered to the bump-mapping circuit synchronizing with the generation of DDA of $N_h$ and $N_v$ in span processor 21.

In a perspective projection system, the reverse-projection transformation is applied to $N_h$ and $N_v$ because these angles are defined in device coordinates. If the normal vector is not applied to perspective transformation in mapping the world coordinate system to the device coordinate system, application of the reverse-projection transformation for $N_h$ and $N_v$ is not needed.

The modified bump-angle variables $\beta$ and $m$ are applied to the bump mapping circuit in Fig. 2. At this time, the filtering for scaling may be applied. In circuit 22, operations based on equation (6) are executed, outputting $N_h'$ and $N_v'$, which are rotated the $N_h$ and $N_v$ with the $B_h$ and $B_v$. $N_h'$ and $N_v'$ are given to shading circuit 26, which is equivalent to the circuits of Figs. 1.

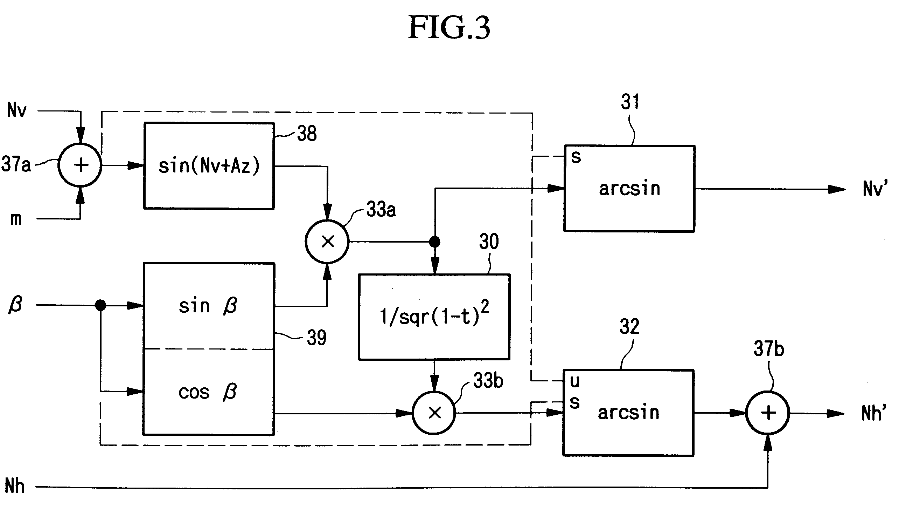

Attention is directed to Fig. 3 which shows the bump-mapping circuit in the invention. The circuit is based on equation (6). The trigonometric function-tables of 38, 39, 30, 31 and 32 consist of memory devices. These memory devices could be based on RAM, but ROM is used for all memory tables. The surface angle $N_v$ and bump-angle $m$ are added at adder 37a and applied as $(N_v + m)$ to the sine ROM38. Bump-angle $\beta$ is applied to ROM39, which stores $\sin(\beta)$ and $\cos(\beta)$ separately. At multipfier 33a, $t = \sin(N_v+m)\sin(\beta)$ is obtained, which is then applied to ROM30, which stores the function

$$1/\sqrt{1 - t^2}.$$

$N_v'$ is obtained to apply the output data of multiplier 33a to arcsin ROM31. $N_h'$ is obtained to multiply $\cos \beta$ with the output data of ROM30 at multipfier 33b and applied to the arcsin ROM32 before adding to $N_h$ at adder 37b. The upper bit of angle-value is used for the sign of equation (6), so that the table is shared according to the upper bit. As shown in Fig. 3, there is no feedback loop in the bump-mapping circuit. It can output the result with only the delay of memory devices, adder and multipliers. Thus, the bump-rotated angle can be obtained within a clock cycle.

§ 3. Bump-mapped shading circuit

Rotating the bump normal with the surface normal and rotating the surface normal with the bump normal are equivalent. Thus, if the bump normal represents a 3-axis component using the horizontal $B_h$ and vertical $B_v$ angles, a rotated angle is given by the rotation-matrix as follows:

$$\begin{bmatrix} X1 \\ Y1 \\ Z1 \end{bmatrix} = \begin{bmatrix} \cos(N_h) & 0 & \sin(N_h) \\ 0 & 1 & 0 \\ -\sin(N_h) & 0 & \cos(N_h) \end{bmatrix} \begin{bmatrix} 1 & 0 & 0 \\ 0 & \cos(N_v) & \sin(N_v) \\ 0 & -sin(N_v) & \cos(N_v) \end{bmatrix} \begin{bmatrix} X0 \\ Y0 \\ Z0 \end{bmatrix}$$

$$X0 = \sin B_h \cos B_v; Y0 = \sin B_v; Z0 = \cos B_h \cos B_v \tag{7}$$

The trigonometric functions in the above matrix parameters contain one variable of either horizontal or vertical angle, so that the circuit can be designed with small memory size. For shading computation, diffusion angle $\cos \theta$ and specular angle $\cos \alpha$ in Phong-shading are given by following equations:

$$\cos \theta = X1 \cos L_h / \sin L_h + Y1 \sin L_v \tag{8}$$

$$\cos \alpha \approx (\cos \theta + Z1)/2$$

Using equations (7) and (8), the circuit is implemented with memory devices, multipliers and adders, which output bump-mapped shading pixels at every clock cycle.

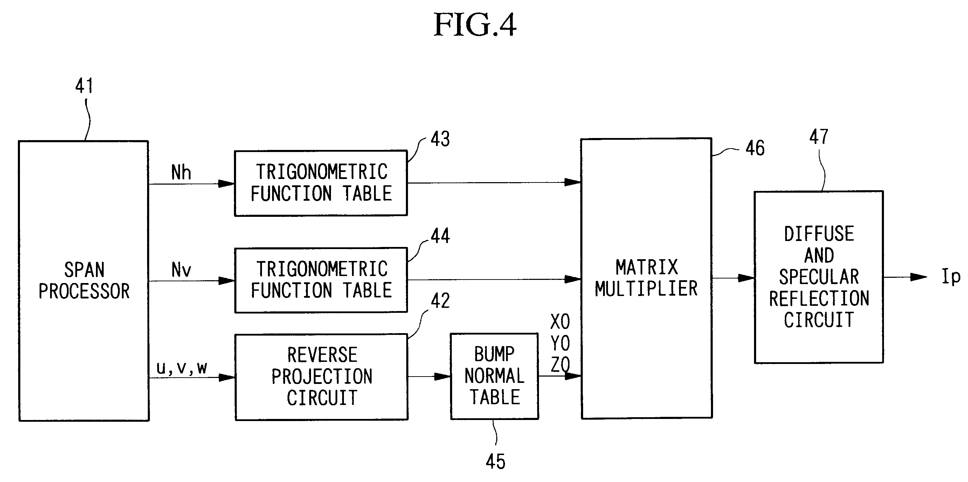

Fig. 4 shows the circuit of the invention. In Fig. 4, span processor 41 outputs the angle values $N_h$ and $N_v$ of surface and the $u$, $v$ texture address. The $u$, $v$ address is applied to the reverse-projection circuit 42 where outputs the address to the RAM45. RAM45 stores the values of the bump-angle function, $X0$, $Y0$ and $Z0$ in equation (7). $N_h$ and $N_v$ are applied to the trigonometric function-tables 43 and 44, respectively. The outputs of tables 43 and 44 are given to the rotation-matrix multipfier 46 as parameters in the matrix of equation (7), obtaining the cosines of diffuse and specular reflection. These cosines are multiplied with texture pattern color in circuit 47.

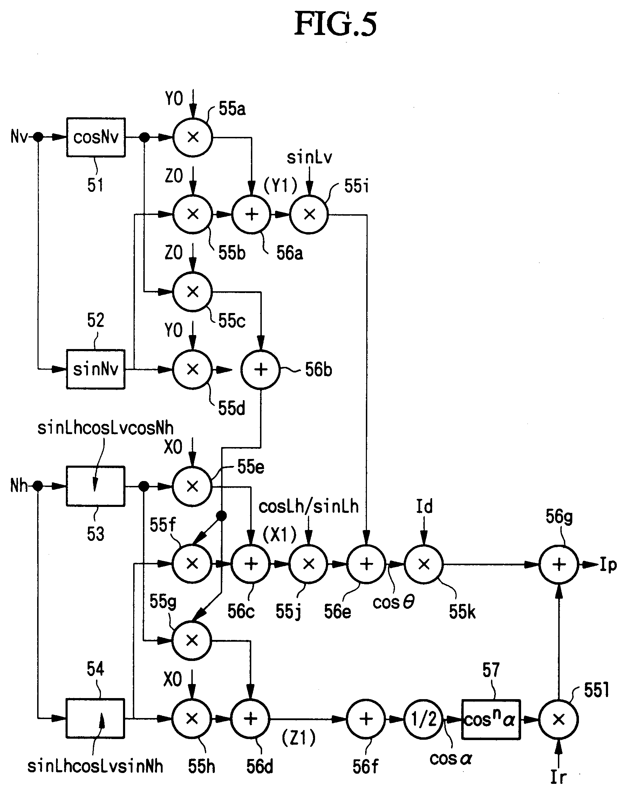

Attention is directed to Fig. 5, which shows the circuit in this invention based on Fig. 4. In Fig. 5, surface angles $N_h$ and $N_v$ are applied to trigonometric function tables 51 - 54, where ROM51, ROM52, RAM53 and RAM54 store $\cos N_v$, $\sin N_v$, $\sin L_h \cos L_v \cos N_h$, and $\sin L_h \cos L_v \sin N_h$, respectively. These output data are applied to multipfiers 55a - 55h and multiplied with $X0$, $Y0$ and $Z0$, based on equation (7). The output data of multipliers 55a - 55h are then applied to adders 56a - 56d, respectively, to obtain $X1$, $Y1$ and $Z1$ in matrix equation (7). $X1$ and $Y1$ are multiplied by $\cos(L_h)/\sin(L_h)$ and $\sin(L_v)$ at multipliers 55j and 55i, respectively, and then $\cos \theta$ and $\cos \alpha$ are obtained via adders 56e and 56f, respectively. The 1/2 coefficient in Fig. 5 shows the 1 bit shift-down circuit. In Fig. 5, it is obvious that RAMs 53 and 54 can be replaced with ROMs if the $\sin L_h$ and $\cos L_v$ are replaced with ROM tables and multipliers.

As per the above-described implementation, this invention has the features that (1) the normals for surface and light-source are represented with two angle values, horizontal and vertical angles relative to the eye point axis in device coordinates, and use trigonometric function tables with similar ranges of single angle variable (equations (1) and (2)), (2) the bump-pattern normals are defined by horizontal and vertical angles relative to the perpendicular to the $u$, $v$-axes and addressed with the same address as the texture pattern, storing its pattern as a modified bump normal value (equations (5) or (7)), (3) the bump-mapping circuit rotates the bump normal with the surface normal or rotates the surface normal with the bump normal before applying the shading circuit using the trigonometric function ROM tables.

This invention is applied for the arithmetic operation circuit of graphics processor to be used for amusement and computer simulation due to the use of small scaled ASIC. This technology provides an important visual technology of computer graphics to establish the virtual reality system.

## Claims

1. A computer graphics circuit comprising a span processor for polygon filling by means of interpolation of coordinates and surface-normals defined at each polygon vertex, memory devices storing bump-normals and texture pattern, a bump-mapping circuit, and a shading circuit to compute a shading caused by light-sources, said bump-mapped shading circuit comprising;

   means for defining a surface and a light-source normal with horizontal and vertical angles relative to an eye-point axis in device coordinates, defining a bump normal with two dimensional array in a same coordinate of texture pattern and storing said bump-normal into said memory device;
   means for interpolating said coordinates and angles defined at said each polygon vertex for all insides of polygon;

means for reading out said bump-angle from said memory device by a texture address synchronizing with interpolation of span processor;

means for rotating said surface-angle with said bump-angle read out from said memory device;

means for applying said rotated horizontal and vertical angles to said shading circuit employed a diffuse-reflection and a specular-reflection circuits; and

means for multiplying an intensity obtained by said shading circuit with said texture pattern to render a shade on texture-mapped surface.

2. A shading circuit as described in claim 1, wherein said means of storing the bump-angle into memory device, comprising:

means for arranging a position of said bump-angle in the same two-dimensional coordinates as the texture pattern coordinates, interpolating a surface in a device coordinate, computing a reverse- projective mapping-address, and reading out said bump-angle and texture pattern from said memory devices using said reverse-projective mapping-address.

3. Bump-mapped shading circuits described in claim 1 ~ 2, comprising:

means for rotating said surface-angle with said bump-angle using memory devices of trigonometric function in which each trigonometric function table for rotation is defined by one variable of either said horizontal or vertical angle.

4. Bump-mapped shading circuits described in claim 1 ~ 3, comprising:

means for implementing memory devices, adders and multipliers in said shading circuit, where said memory devices of trigonometric function store one variable of either said horizontal or vertical angle of surface-normal which is rotated by bump-angle at said bump mapping circuit.

5. Bump-mapped shading circuits described in claim 1 or 4, comprising:

means for multiplying intensity with said texture pattern in order to get a texture-mapped surface of bump-mapping, where said intensity is obtained at said shading circuit and said texture pattern is defined by color components of red, green and blue.

6. Bump-mapped shading circuits described in claim 4, comprising:

means for using RAM for said trigonometric function tables which contained said light-source angles and specular exponent, and using ROM for said trigonometric function tables which contained only surface or bump-angle.

FIG.1

EP 0 764 921 A1

# FIG.2

EP 0 764 921 A1

# FIG.3

EP 0 764 921 A1

# FIG.4

SPAN PROCESSOR (41)

Nh → TRIGONOMETRIC FUNCTION TABLE (43) → MATRIX MULTIPLIER (46)

Nv → TRIGONOMETRIC FUNCTION TABLE (44) → MATRIX MULTIPLIER (46)

u,v,w → REVERSE PROJECTION CIRCUIT (42) → BUMP NORMAL TABLE (45) → X0 Y0 Z0 → MATRIX MULTIPLIER (46)

MATRIX MULTIPLIER (46) → DIFFUSE AND SPECULAR REFLECTION CIRCUIT (47) → Ip

EP 0 764 921 A1

# FIG.5

## INTERNATIONAL SEARCH REPORT

| | |
|---|---|
| International application No. |
| **PCT/JP96/00726** |

**A. CLASSIFICATION OF SUBJECT MATTER**

Int. Cl$^6$  G06T15/50

According to International Patent Classification (IPC) or to both national classification and IPC

**B. FIELDS SEARCHED**

Minimum documentation searched (classification system followed by classification symbols)

Int. Cl$^6$  G06T15/50

Documentation searched other than minimum documentation to the extent that such documents are included in the fields searched

Jitsuyo Shinan Koho          1926 - 1996
Kokai Jitsuyo Shinan Koho    1971 - 1996

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 05-298460, A (Dainippon Printing Co., Ltd.), November 12, 1993 (12. 11. 93)(Family: none) | 1 - 6 |
| A | JP, 03-271877, A (Fujitsu Ltd.), December 3, 1991 (03. 12. 91)(Family: none) | 1 - 6 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| June 17, 1996 (17. 06. 96) | June 25, 1996 (25. 06. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)

13